# EUROPÄISCHE PATENTSCHRIFT

(11) **EP 1 082 241 B1**
(45) Veröffentlichungstag und Bekanntmachung des Hinweises auf die Patenterteilung: **03.07.2002**
(21) Anmeldenummer: 99923586.4
(22) Anmeldetag: 12.05.1999
(51) Int. Cl.: B60T 8/00

(54) **VERFAHREN UND VORRICHTUNG ZUR REGELUNG DES ANTRIEBSSCHLUPFS EINES FAHRZEUGS AUF EINER FAHRBAHN MIT SEITENWEISE UNTERSCHIEDLICHEN REIBWERTEN**
METHOD AND DEVICE FOR ANTI-SKID REGULATION OF A VEHICLE ON A ROADWAY WITH DIFFERENT LATERAL FRICTION COEFFICIENTS
PROCEDE ET DISPOSITIF DE REGULATION ANTIPATINAGE D'UN VEHICULE SUR UNE CHAUSSEE PRESENTANT DES COEFFICIENTS D'ADHERENCE DIFFERENTS SUR LES COTES

(30) Priorität: 05.06.1998 DE 19825272; 27.10.1998 DE 19849407
(43) Veröffentlichungstag der Anmeldung: 14.03.2001
(73) Patentinhaber: Continental Teves AG & Co. oHG, 60488 Frankfurt (DE)
(72) Erfinder: LATARNIK, Michael, D-61381 Friedrichsdorf (DE); KAHL, Harald, D-65556 Limburg (DE); HALAT, Siegfried, D-64289 Darmstadt (DE); STÖCKMANN, Ulrich, D-64289 Darmstadt (DE); HARTMANN, Bernd-Uwe, D-63584 Gründau (DE)
(86) Internationale Anmeldenummer: EP9903280
(87) Internationale Veröffentlichungsnummer: WO9964280

(56) Entgegenhaltungen:
- EP-A- 0 498 355
- DE-A- 19 537 439
- DE-A- 19 648 055
- US-A- 5 275 474

## Beschreibung

Die Erfindung betrifft ein Verfahren und eine Vorrichtung zur Regelung des Antriebsschlupfs eines Fahrzeugs auf einer Fahrbahn mit seitenweise unterschiedlichen Reibwerten gemäß den Oberbegriffen der unabhängigen Ansprüche.

Antriebsschlupf bedeutet grundsätzlich, daß die Räder schneller drehen als es der Fahrgeschwindigkeit des Fahrzeugs entspricht. Dies tritt meistens dann auf, wenn das Antriebsmoment größer als das Moment ist, das aufgrund der Reibverhältnisse zwischen Rad und Fahrbahn zwischen diesen beiden übertragen werden kann.

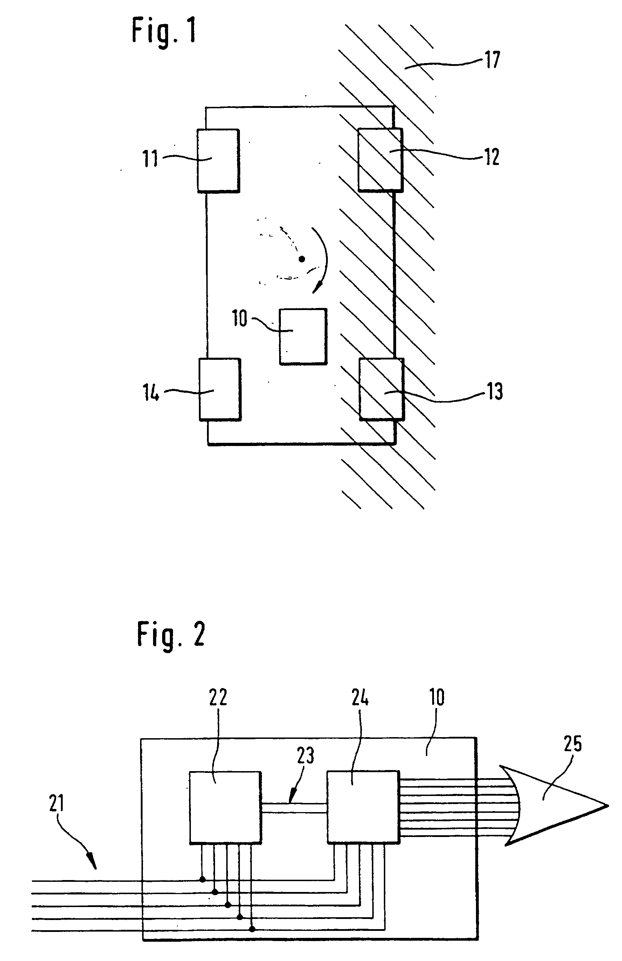

Fig. 1 zeigt schematisch ein Fahrzeug von oben. 11 sei das Rad vorne links, 12 das Rad vorne rechts, 13 das Rad hinten rechts und 14 das Rad hinten links. Die Antriebsschlupfregelung ist mit 10 bezeichnet. Wenn das Fahrzeug frontgetrieben ist, kann Antriebsschlupf an den Rädern 11, 12 auftreten. Um den prinzipiell unerwünschten Antriebsschlupf zu reduzieren, kann entweder das Motormoment reduziert werden, oder es kann Bremsdruck aufgebaut werden, um die durchdrehenden Räder abzubremsen. Letzteres wird insbesondere dann gewählt, wenn niedrige Drehzahlen herrschen und somit die Reduzierung des Motormoments kaum möglich ist.

Es können vergleichsweise ungünstige Fahrsituationen vorliegen. Beispielsweise kann eine Fahrbahn mit seitenweise geteiltem Reibwert vorliegen, etwa dahingehend, daß die rechten Räder auf niedrigem Reibwert fahren (Fahrbahn naß, sandig, glatt), während die linken Räder auf hohem Reibwert fahren (Fahrbahn trocken). In Fig. 1 ist dies durch die Schraffur 17 symbolisiert, die Fahrbahnbereiche mit niedrigem Reibwert darstellen soll. Ohne Antriebsschlupfregelung kann der Fall auftreten, daß das angetriebene Rad auf niedrigem Reibwert (z.B. 12) durchdreht, während das Rad auf hohem Reibwert aufgrund der Wirkung des Differentials kaum angetrieben wird. Die Traktion ist dann schlecht.

Es sind radindividuelle Antriebsschlupfregelungen bekannt (z.B. BTCS für "brake traction control system"), die den Radschlupf radindividuell regeln. Bei schwierigen Anfahrsituationen werden manchmal hohe Antriebsschlupfwerte benötigt, die regelungstechnisch nicht unterdrückt werden dürfen, um das Anfahren nicht unmöglich zu machen. Wenn sich in solchen ungünstigen Situationen, z.B. bergauf bei geteiltem Reibwert, auch auf der Hochreibwertseite Antriebsschlupf aufbaut, führt der Aufbau von Bremsdruck zu Verlust von Komfort und möglicherweise auch von Traktion.

Aus der DE 195 37 439 A ist ein Verfahren zur Steuerung der Bremsanlage im ASR-Fall bekannt, bei dem die Einregelung des Druckniveaus in der Radbremse mit dem höchsten Druckniveau durch Ansteuern eines den Druck an allen Radbremsen eines Bremskreises beeinflussenden Ventils erfolgt, wobei die Druckniveauregelung über radindividuelle Ein- und Auslassventile erfolgt.

Weiterhin sind aus ATZ Automobiltechnische Zeitschrift 93(1991), ABS-integrierte Schlupfregelsysteme, Seite 4-10 bekannt, die langsame und schnelle Regelkreise, auch in Kombination, vorsehen.

Daneben gibt es Antriebsschlupfregelungen, die nur den Antriebsschlupf an einem Rad regeln, hierbei aber u.U. auch das Radverhalten des anderen Rades berücksichtigen (z.B. EDS für "elektronische Differentialsperre"). Sie erfüllen insbesondere bei großen Reibwertunterschieden das regelungstechnische Ziel des Aufbaus von Bremsdruck nur auf der Seite mit niedrigem Reibwert, um möglichst die gesamte Motorleistung für die Traktion verfügbar zu machen. Diese Systeme regeln zwar den Bremsdruck auf der Niedrigreibwertseite auch in Abhängigkeit des Verhaltens des angetriebenen Rads auf der Hochreibwertseite. Wenn sich aber auf der Hochreibwertseite Antriebsschlupf aufbaut, ergibt sich der Nachteil des Traktionsverlustes infolge starker Reduzierung des Stützmoments und der Komfortreduzierung infolge hohen Antriebsschlupfs auf der Niedrigreibwertseite. Auf Fahrbahnen mit beidseitig gleichem Reibwert und deshalb etwa gleichem Antriebsschlupf aller angetriebenen Räder wird kein Eingriff vorgenommen.

Aufgabe der Erfindung ist es, ein Verfahren und eine Vorrichtung zur Regelung des Antriebsschlupfs eines Fahrzeugs auf einer Fahrbahn mit seitenweise unterschiedlichen Reibwerten anzugeben, die die Traktionsmaximierung erlauben und zu einer möglichst geringen Komforteinbuße führen.

Diese Aufgabe wird mit den Merkmalen der unabhängigen Ansprüche gelöst. Abhängige Ansprüche sind auf bevorzugte Ausführungsformen der Erfindung gerichtet.

Zunächst wird die Fahrsituation auf einer Fahrbahn mit seitenweise unterschiedlichen Reibwerten erkannt. Die Erkennung kann beispielsweise durch Vergleich der Schlupfe der Räder der angetriebenen Achse erfolgen. Wenn die Schlupfe deutlich unterschiedlich sind, kann auf eine Fahrsituation mit geteiltem Reibwert geschlossen werden. Anstelle der Schlupfe können auch die jeweiligen Radgeschwindigkeiten genommen werden (da die Schlupfe jeweils als Differenz zwischen Radgeschwindigkeit und Fahrzeugreferenzgeschwindigkeit berechnet werden).

Um dem Traktionsverlust zu begegnen, kann dann, wenn an beiden Rädern der angetriebenen Achse Antriebsschlupf auftritt, der Bremsdruck am angetriebenen Rad auf der Niedrigreibwertseite abgesenkt werden. Dies führt zwar zu einem höheren Antriebsschlupf auf der Niedrigreibwertseite, aber (aufgrund des Differentials) zu geringerem Schlupf auf der Hochreibwertseite, bestenfalls zum erneuten Greifen dieses Rades und damit zu einer verbesserten Traktion, einem stetigen Vortrieb und damit einem nur unwesentlich reduzierten Fahrkomfort.

Eine Antriebsschlupfregelvorrichtung weist eine Erkennungseinrichtung zum Erkennen des geteilten Reibwerts auf der Fahrbahn auf und eine Bremsenansteuerung, die bei geteiltem Reibwert und beiderseits vorliegendem Antriebsschlupf den Bremsdruck auf der Niedrigreibwertseite absenkt. Die Bremsenansteuerung kann Teil einer umfassenden Bremsenregelung sein, die verschiedene Regelungsziele wie Antiblockiersystem oder elektronische Stabilitätsoptimierung wahrnimmt. Insbesondere kann die erfindungsgemäße Antriebsschlupfregelung Teil einer bekannten Antriebsschlupfregelung sein. vorzugsweise wird sie als Ergänzung zu einer radindividuellen Antriebsschlupfregelung ausgelegt. Sie kann dann beispielsweise das eingangs genannte BTCS ergänzen.

Bezugnehmend auf die Zeichnungen werden nun einzelne Ausführungsformen der Erfindung beschrieben, es zeigen:
- Fig. 1: schematisch ein Fahrzeug in Draufsicht,
- Fig. 2: schematisch als Blockdiagramm die für diese Erfindung wesentlichen Komponenten der Antriebsschlupfregelung,
- Fig. 3: die Erkennungseinrichtung aus Fig. 2, und
- Fig. 4: die Bremsenansteuerung aus Fig. 2.

Fig. 2 zeigt eine Antriebsschlupfregelung 10, die eine Erkennungseinrichtung 22 und eine Bremsenansteuerung 24 aufweist. Ganz allgemein ausgedrückt können die hier beschriebenen Komponenten zur Umsetzung der ebenfalls beschriebenen Verfahrensschritte ausgelegt sein, und es können Verfahrensschritte entsprechend den einzelnen beschriebenen Komponenten ausgeführt werden.
In der Erkennungseinrichtung werden verschiedene Überprüfungen vorgenommen, um einerseits die Situation positiv erkennen zu können, um andererseits Fehlerkennungen ausschließen zu können und um schließlich gegebenenfalls auch die Seite mit niedrigem bzw. die Seite mit hohem Reibwert zu identifizieren.

Ganz allgemein kann die Antriebsschlupfregelung verschiedenste Eingangssignale 21 empfangen. Diese Signale können beispielsweise die von den Radsensoren erhaltenen Radsignale umfassen. Daneben können weitere Sensorsignale oder Sekundärsignale je nach Bedarf empfangen und ausgewertet werden. Soweit vorhanden, können entweder Direktsensorsignale verwendet werden oder aufbereitete (gefilterte) Sensorsignale oder Signale von einem Datenbus genommen werden. Unabhängig von ihrer Herkunft sind solche sensorbasierenden Signale durch 21 bezeichnet.

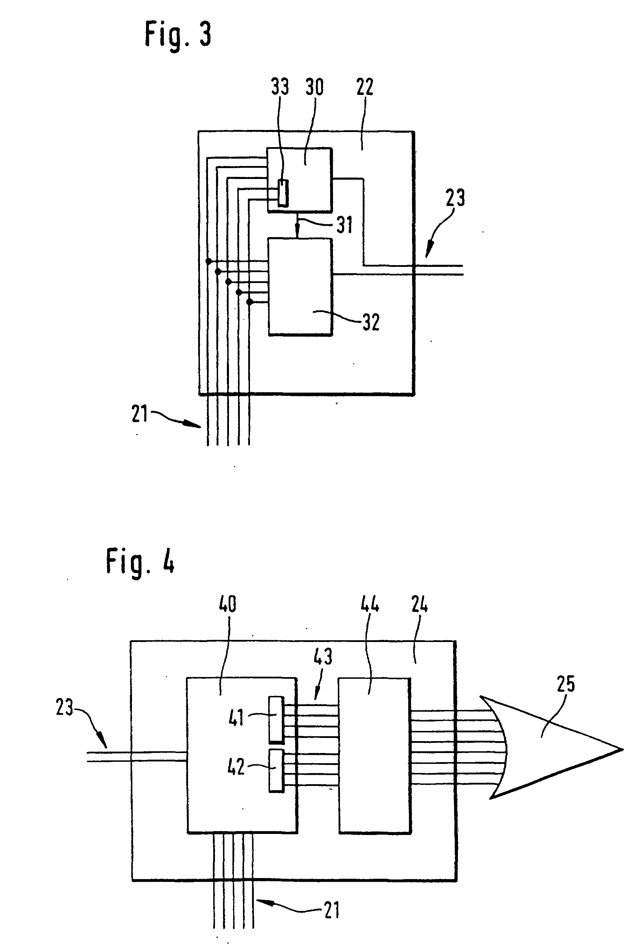

Die Erkennungseinrichtung 22 ist in Fig. 3 ausführlicher gezeichnet. Sie weist eine Festlegungseinrichtung 30 auf, mit der die Hochreibwertseite bzw. Niedrigreibwertseite des Fahrzeugs erkannt werden kann. Die Festlegungseinrichtung 30 kann beispielsweise eine Vergleichseinrichtung 33 aufweisen, mit der die Schlupfe der angetriebenen Räder verglichen werden. Da a priori von gleichem Antriebsmoment an den beiden Rädern ausgegangen werden kann, kann dasjenige Rad als auf der Seite mit niedrigerem Reibwert laufend angesehen werden, das den höheren Schlupf aufweist. Anstelle der Schlupfe der angetriebenen Räder können auch die Radgeschwindigkeiten dieser Räder miteinander verglichen werden. Die Erkennungseinrichtung erzeugt ein Ausgangssignal, das die Seite mit hohem oder mit niedrigem Reibwert kennzeichnet.

Außerdem ist eine Überprüfungsvorrichtung 32 vorgesehen, in der verschiedene Überprüfungen vorgenommen werden. Es können einzelne, mehrere oder alle der nachstehend genannten Überprüfungen erfolgen:
- Es wird überprüft, ob der Schlupf des angetriebenen Rades auf der Hochreibwertseite über einem ersten Schwellenwert liegt,
- es wird überprüft, ob der Schlupf des angetriebenen Rads auf der Niedrigreibwertseite über einem zweiten Schwellenwert liegt,
- es wird überprüft, ob die Schlupfbeschleunigung und/oder die Radbeschleunigung am angetriebenen Rad auf der Hochreibwertseite über einem positiven Schwellenwert und ob die Schlupfbeschleunigung und/oder die Radbeschleunigung am angetriebenen Rad auf der Niedrigreibwertseite unter einem negativen Schwellenwert liegen,
- die Bremsdrücke an den angetriebenen Rädern werden auf ihren Wert hin überprüft und/oder miteinander verglichen.

Beide angetriebenen Räder müssen im Schlupf sein, da nur dann das durch die Erfindung aufzuhebende Problem vorliegt. Der Schlupf des angetriebenen Rads auf der Hochreibwertseite soll nicht so hoch werden, daß herkömmliche Antriebsschlupfregelungen eingreifen. Der erste Schwellenwert soll deshalb unter einer Eingriffsschwelle herkömmlicher Antriebsschlupfregelsysteme liegen.

Die Schlupfbeschleunigung oder Radbeschleunigung des Hochreibwertrads wird abgefragt und auf einen positiven Schwellenwert überprüft. Wenn die Werte negativ sind, deutet dies auf ein Abnehmen des Schlupfs bzw. der Radgeschwindigkeit des Hochreibwertrades hin. Ein Eingriff ist dann nicht notwendig, weil eine selbständige Korrektur der Situation erwartet werden kann.

Die Schlupfbeschleunigung oder Radbeschleunigung des Niedrigreibwertrades wird ebenfalls abgefragt, um unnötige Eingriffe zu verhindern: Wenn die Beschleunigung deutlich negativ ist, deutet dies auf eine zu starke Abbremsung des Niedrigreibwertrades hin, so daß durch den erfindungsgemäßen Eingriff (Druckabbau am Niedrigreibwertrad) ein günstiges Ergebnis erwartet werden kann.

Am Niedrigreibwertrad soll der Bremsdruck höher als ein Mindestwert sein. Der diesbezügliche Schwellenwert für den Mindestbremsdruck kann im Sinne eine Hysterese außerhalb des Vorliegens der Fahrsituation höher sein als innerhalb. Vorzugsweise wird auf die Fahrsituation nur erkannt, wenn der Bremsdruck am Niedrigreibwertrad mindestens um einen bestimmten Betrag höher ist als der Bremsdruck am Hochreibwertrad.

Bei Vorliegen der genannten Bedingungen kann auf die Fahrsituation mit seitenweise unterschiedlichen Reibwerten erkannt werden, wobei je nach Anzahl der weiter berücksichtigten Kriterien die Erkennung auch eine Beurteilung dahingehend enthält, ob der vorgesehene Eingriff sinnvoll ist bzw. Erfolg verspricht. Wenn die Überprüfungseinrichtung 32 insgesamt zu einem positiven Ergebnis kommt, gibt sie ihrerseits ein Signal aus, das zusammen mit dem Signal der Festlegungseinrichtung 30 als ein Gesamtsignal 23 ausgegeben werden kann. Fig. 3 zeigt beispielhaft zwei Signalleitungen. Die Erkennungseinrichtung kann aber auch ein komplexeres und beispielsweise quantitative Vorgaben gebendes Signal 23 erzeugen.

Wenn die Erkennungseinrichtung 22 ein erkennendes Signal 23 ausgibt, wird die Bremsenansteuerung 24 auf der Niedrigreibwertseite eine Bremsdruckabsenkung veranlassen. Die Bremsenansteuerung 24 ist etwas ausführlicher in Fig. 4 gezeigt. Sie umfaßt eine Sollwertvorgabe 40 und eine Steuersignalerzeugung 44. Die Sollwertvorgabe 40 kann eine Vorgabe 41 für Solldruckgradienten und eine Vorgabe 42 für Solldrücke aufweisen. Beispielsweise kann auf die Erkennung hin ein bestimmter negativer Sollgradient für den Bremsdruck des Rades auf der Niedrigreibwertseite eingestellt werden, wobei dieser Gradient seinerseits abhängig sein kann vom Laufverhalten (Schlupf, Geschwindigkeit, Beschleunigung) des Niedrigreibwertrades und/oder des Hochreibwertrades. In der Steuersignalerzeugung 44 werden dann nach Maßgabe der vorgegebenen Sollwerte (Solldruck, Sollgradient) Ansteuersignale für die Ventile der Radbremsen erzeugt und als Ausgangssignale 25 ausgegeben und u.a. dem Ventilblock zugeführt.

Erkennungseinrichtung 22 und Bremsenansteuerung 24 können ihrerseits Eingangssignale 21 empfangen, insbesondere Radgeschwindigkeiten, Fahrzeugreferenzgeschwindigkeit, Bremsdrucksignale u.ä. Die Signale können unmittelbar oder mittelbar Sensoren entnommen werden, einem Fahrzeugdatenbus oder Modellen (beispielsweise Bremsdruckmodelle).

Bei der erfindungsgemäßen Antriebsschlupfregelung wird der Antriebsschlupf auf der Hochreibwertseite nur vergleichsweise kurz vorliegen, so daß auch nur über eine jeweils vergleichsweise kurze Zeitspanne ein Druckabbau auf der Niedrigreibwertseite erfolgt. Die sich daraus ergebende Erhöhung des Antriebsschlupfs ist so gering, daß hierdurch der Fahrkomfort nicht vermindert wird.

Wenn trotz der getroffenen Maßnahmen der Antriebsschlupf auf der Hochreibwertseite einen Schwellenwert überschreitet, kann an diesem Rad radindividuell der Bremsschlupf gesteuert bzw. geregelt werden. So kann auch bei Vorgängen wie etwa dem Anfahren an einer Steigung trotz geteiltem Reibwert beispielsweise aufgrund von Trägheitsmomenten im Antriebsstrang oder wegen eines vergleichsweise niedrigen Reibwerts auf der Hochreibwertseite temporär ein größerer Antriebsschlupf auf der Hochreibwertseite auftreten. Diese Situation erfüllt dann nicht die oben beschriebenen Kriterien für einen Druckabbau am Niedrigreibwertrad, so daß auch kein Druckabbau dort veranlaßt wird.

## Patentansprüche

1. Verfahren zur Regelung des Antriebsschlupfes eines Fahrzeugs auf einer Fahrbahn mit seitenweise unterschiedlichen Reibwerten, **gekennzeichnet durch** die Schritte, Erkennen einer Fahrsituation auf einer Fahrbahn mit seitenweise unterschiedlichen Reibwerten, und, wenn die Fahrsituation erkannt ist und an beiden Rädern Antriebsschlupf auftritt, Absenken des Bremsdrucks am angetriebenen Rad auf der Niedrigreibwertseite.

2. Verfahren nach Anspruch 1, **dadurch gekennzeichnet, daß** zur Erkennung folgende Schritte ausgeführt werden:
Festlegen, welche Fahrzeugseite die Hochreibwertseite und welche die Niedrigreibwertseite ist,
Überprüfen, ob der Schlupf des angetriebenen Rades auf der Hochreibwertseite über einem ersten Schwellenwert liegt,
Überprüfen, ob der Schlupf des angetriebenen Rades auf der Niedrigreibwertseite über einem zweiten Schwellenwert liegt,
Überprüfen, ob die Schlupfbeschleunigung und/oder die Radbeschleunigung am angetriebenen Rad auf der Hochreibwertseite über einem positiven Schwellenwert ' liegt und ob die Schlupfbeschleunigung und/oder die Radbeschleunigung am angetriebenen Rad auf der Niedrigreibwertseite unter einem negativen Schwellenwert liegt, und
Überprüfen der Bremsdrücke an den beiden Rädern und/oder Vergleichen der Bremsdrücke miteinander.

3. Verfahren nach Anspruch 2, **dadurch gekennzeichnet, daß** bei der Festlegung der Hoch- bzw. Niedrigreibwertseite die Schlupfe oder Geschwindigkeiten der angetriebenen Räder verglichen werden, wobei diejenige Seite, an der der größere Schlupf vorliegt, als Niedrigreibwertseite festgelegt wird.

4. Verfahren nach Anspruch 2 oder 3, **dadurch gekennzeichnet, daß** der erste Schwellenwert niedriger als ein Schwellenwert gesetzt wird, bei dem eine radindividuelle Antriebsschlüpfregelung eingreift.

5. Verfahren nach einem der Ansprüche 2 bis 4, **dadurch gekennzeichnet, daß** bei der Überprüfung der Bremsdrücke der Bremsdruck auf der Niedrigreibwertseite daraufhin überprüft wird, ob er über einem dritten Schwellenwert liegt, und der Bremsdruck auf der Hochreibwertseite daraufhin, ob er unter einem vierten Schwellenwert liegt.

6. Verfahren nach einem der Ansprüche 2 bis 5, **dadurch gekennzeichnet, daß** beim Vergleich der Bremsdrücke diese daraufhin überprüft werden, ob der Bremsdruck auf der Hochreibwertseite mindestens um einen bestimmten Betrag unter dem Bremsdruck auf der Niedrigreibwertseite liegt.

7. Verfahren nach einem der Ansprüche 2 bis 6, **dadurch gekennzeichnet, daß** als Radschlupfwerte gefilterte Werte herangezogen werden.

8. Verfahren nach einem der vorherigen Ansprüche, **dadurch gekennzeichnet, daß** die Bremsdruckabsenkung nach Maßgabe eines bestimmbaren Gradienten erfolgt.

9. Verfahren nach Anspruch 8, **dadurch gekennzeichnet, daß** der Gradient nach Maßgabe des Schlupfes und/oder der Schlupfbeschleunigung des Rades auf der Hochreibwertseite und/oder des Rades auf der Niedrigreibwertseite bestimmt wird.

10. Verfahren nach einem der vorherigen Ansprüche, **dadurch gekennzeichnet, daß** es ergänzend zu einem radindividuell wirkenden Antriebsschlupfregelverfahren ausgeführt wird, bei dem radindividuell der Antriebsschlupf mit einer ggf. fahrzeuggeschwindigkeitsabhängigen Schwelle verglichen und durch Motormomentenabsenkung und/oder radindividuelle Bremsdruckerhöhung verändert wird.

11. Vorrichtung zur Regelung des Antriebsschlupfes eines Fahrzeugs auf einer Fahrbahn mit seitenweise unterschiedlichen Reibwerten, insbesondere zur Durchführung des Verfahrens nach einem der Ansprüche 1 bis 10, **gekennzeichnet durch**
eine Erkennungseinrichtung (22) zum Erkennen einer Fahrsituation auf einer Fahrbahn mit seitenweise unterschiedlichen Reibwerten, und eine Bremsenansteuerung (24), die dann, wenn die Fahrsituation erkannt ist und an beiden Rädern Antriebsschlupf auftritt, den Bremsdruck am angetriebenen Rad auf der Niedrigreibwertseite absenkt.

12. Vorrichtung nach Anspruch 11, **dadurch gekennzeichnet, daß** die Erkennungseinrichtung (22) aufweist:
eine Festlegungseinrichtung (30) zum Festlegen, welche Fahrzeugseite die Hochreibwertseite und welche die Niedrigreibwertseite ist, und
eine Überprüfungseinrichtung (32) zum Überprüfen, ob der Schlupf des angetriebenen Rades auf der Hochreibwertseite über einem ersten Schwellenwert liegt, ob der Schlupf des angetriebenen Rades auf der Niedrigreibwertseite über einem zweiten Schwellenwert liegt, ob die Schlupfbeschleunigung und/oder die Radbeschleunigung am angetriebenen Rad auf der Hochreibwertseite über einem positiven Schwellenwert liegt und ob die Schlupfbeschleunigung und/oder die Radbeschleunigung am angetriebenen Rad auf der Niedrigreibwertseite unter einem negativen Schwellenwert liegt, und zum Überprüfen der Bremsdrücke an den beiden Rädern und/oder Vergleichen der Bremsdrücke miteinander.

13. Vorrichtung nach Anspruch 12, **dadurch gekennzeichnet, daß** die Festlegungseinrichtung (30) eine Vergleichseinrichtung (33) zum Vergleichen der Schlupfe oder Geschwindigkeiten der angetriebenen Rädern aufweist, wobei diejenige Seite, an der der größere Schlupf oder die größere Geschwindigkeit vorliegt, als Niedrigreibwertseite festgelegt wird.

14. Vorrichtung nach Anspruch 12 oder 13, **dadurch gekennzeichnet, daß** der erste Schwellenwert niedriger als ein Schwellenwert gesetzt wird, bei dem eine radindividuelle Antriebsschlupfregelung eingreift.

15. Vorrichtung nach einem der Ansprüche 12 bis 14, **dadurch gekennzeichnet, daß** die Überprüfungseinrichtung (32) den Bremsdruck auf der Niedrigreibwertseite daraufhin überprüft, ob er über einem dritten Schwellenwert liegt, und den Bremsdruck auf der Hochreibwertseite daraufhin, ob er unter einem vierten Schwellenwert liegt.

16. Vorrichtung nach einem der Ansprüche 12 bis 15, **dadurch gekennzeichnet, daß** beim Vergleich der Bremsdrücke diese daraufhin überprüft werden, ob der Bremsdruck auf der Hochreibwertseite mindestens um einen bestimmten Betrag unter dem Bremsdruck auf der Niedrigreibwertseite liegt.

17. Vorrichtung nach einem der Ansprüche 12 bis 16, **dadurch gekennzeichnet, daß** als Radschlupfwerte gefilterte Werte herangezogen werden.

18. Vorrichtung nach einem der Ansprüche 11 bis 17, **dadurch gekennzeichnet, daß** die Bremsenansteuerung (24) eine Vorgabeeinrichtung (40, 41) zum Vorgeben eines Sollgradienten für die Bremsdruckabsenkung aufweist.

19. Vorrichtung nach Anspruch 18, **dadurch gekennzeichnet, daß** die Vorgabeeinrichtung (40, 41) den Gradienten nach Maßgabe des Schlupfes und/oder der Schlupfbeschleunigung des Rades auf der Hochreibwertseite und/oder des Rades auf der Niedrigreibwertseite bestimmt.

20. Vorrichtung nach einem der Ansprüche 11 bis 19, **dadurch gekennzeichnet, daß** sie ergänzend zu einer radindividuell wirkenden Antriebsschlupfregelvorrichtung vorgesehen ist, bei der radindividuell der Antriebsschlupf mit einer ggf. fahrzeuggeschwindigkeitsabhängigen Schwelle verglichen und durch Motormomentenabsenkung und/oder radindividuelle Bremsdruckerhöhung verändert wird.

## Claims

1. Method of controlling the traction slip of a vehicle on a roadway with sidewise different coefficients of friction, **characterized by** the following steps: identifying a driving situation on a roadway with sidewise different coefficients of friction and, when the driving situation is identified and traction slip is encountered on both wheels, decreasing the brake pressure on the driven wheel on the low coefficient-of-friction side.

2. Method as claimed in claim 1,
**characterized in that** the following steps are performed for identification:
determining which vehicle side is the high coefficient-of-friction side and which is the low coefficient-of-friction side,
checking whether the slip of the driven wheel on the high coefficient-of-friction side is above a first threshold value,
checking whether the slip of the driven wheel on the low coefficient-of-friction side is above a second threshold value,
checking whether the slip acceleration and/or the wheel acceleration of the driven wheel on the high coefficient-of-friction side is above a positive threshold value and
whether the slip acceleration and/or the wheel acceleration of the driven wheel on the low coefficient-of-friction side is below a negative threshold value, and
checking the brake pressures on the two wheels and/or comparing the brake pressures one to the other.

3. Method as claimed in claim 2,
**characterized in that** the amounts of slip or speeds of the driven wheels are compared when fixing the high or low coefficient-of-friction side, wherein the side on which the higher amount of slip prevails is defined as the low coefficient-of-friction side.

4. Method as claimed in claim 2 or 3,
**characterized in that** the first threshold value is set to be lower than a threshold value where traction slip control individually related to a wheel intervenes.

5. Method as claimed in any one of claims 2 to 4,
**characterized in that** when checking the brake pressures, the brake pressure on the low coefficient-of-friction side is checked as to whether it is above a third threshold value, and the brake pressure on the high coefficient-of-friction side is checked as to whether it is below a fourth threshold value.

6. Method as claimed in any one of claims 2 to 5,
**characterized in that** when comparing the brake pressures a check is made whether the brake pressure on the high coefficient-of-friction side is below the brake pressure on the low coefficient-of-friction side at least by a defined amount.

7. Method as claimed in any one of claims 2 to 6,
**characterized in that** filtered values are used as wheel slip values.

8. Method as claimed in any one of the preceding claims,
**characterized in that** brake pressure decrease is effected according to a definable gradient.

9. Method as claimed in claim 8,
**characterized in that** the gradient is determined according to the slip and/or the slip acceleration of the wheel on the high coefficient-of-friction side and/or the wheel on the low coefficient-of-friction side.

10. Method as claimed in any one of the preceding claims,
**characterized in that** the method is performed in addition to a traction slip control method which acts on the individual wheel, wherein the traction slip on the individual wheel is compared to a threshold which is possibly responsive to the vehicle speed, and is changed by engine torque reduction and/or a wheel-individual brake pressure increase.

11. Device for controlling the traction slip of a vehicle on a roadway with sidewise different coefficients of friction, more particularly, for implementing the method as claimed in any one of claims 1 to 10,
**characterized by**
an identification device (22) for identifying a driving situation on a roadway with sidewise different coefficients of friction, and a brake actuation control (24) which decreases the brake pressure of the driven wheel on the low coefficient-of-friction side when the driving situation is identified and traction slip is encountered on both wheels.

12. Device as claimed in claim 11,
**characterized in that** the identification device (22) includes the following components:
a determining device (30) for determining which vehicle side is the high coefficient-of-friction side and which is the low coefficient-of-friction side, and
a checking device (32) for checking whether the slip of the driven wheel on the high coefficient-of-friction side is above a first threshold value, whether the slip of the driven wheel on the low coefficient-of-friction side is above a second threshold value, whether the slip acceleration and/or the wheel acceleration of the driven wheel on the high coefficient-of-friction side is above a positive threshold value, and whether the slip acceleration and/or the wheel acceleration of the driven wheel on the low coefficient-of-friction side is below a negative threshold value, and for checking the brake pressures on the two wheels and/or comparing the brake pressures one to the other.

13. Device as claimed in claim 12,
**characterized in that** the determining device (30) includes a comparison device (33) for comparing the amounts of slip or speeds of the driven wheels, and the side on which the higher amount of slip or the higher speed prevails is defined as the low coefficient-of-friction side.

14. Device as claimed in claim 12 or 13,
**characterized in that** the first threshold value is set to be lower than a threshold value where traction slip control individually related to a wheel intervenes.

15. Device as claimed in any one of claims 12 to 14,
**characterized in that** the checking device (32) checks the brake pressure on the low coefficient-of-friction side as to whether it is above a third threshold value, and checks the brake pressure on the high coefficient-of-friction side as to whether it is below a fourth threshold value.

16. Device as claimed in any one of claims 12 to 15,
**characterized in that** when comparing the brake pressures a check is made as to whether the brake pressure on the high coefficient-of-friction side is below the brake pressure on the low coefficient-of-friction side at least by a defined amount.

17. Device as claimed in any one of claims 12 to 16,
**characterized in that** filtered values are used as wheel slip values.

18. Device as claimed in any one of claims 11 to 17,
**characterized in that** the brake actuation control (24) includes a preset values output (40, 41) for predefining a nominal gradient for brake pressure decrease.

19. Device as claimed in claim 18,
**characterized in that** the preset values output (40, 41) determines the gradient according to the slip and/or the slip acceleration of the wheel on the high coefficient-of-friction side and/or the wheel on the low coefficient-of-friction side.

20. Device as claimed in any one of claims 11 to 19,
**characterized in that** the device is provided in addition to a traction slip control device which acts on the individual wheel, wherein the traction slip on the individual wheel is compared to a threshold which is possibly responsive to the vehicle speed, and is changed by engine torque reduction and/or wheel-individual brake pressure increase.

## Revendications

1. Procédé de régulation du glissement de traction d'un véhicule sur une voie de roulement à coefficients de frottement différents d'un côté à l'autre, **caractérisé par** les opérations consistant à constater une situation de conduite sur une voie de roulement à coefficients de frottement différents d'un côté à l'autre et, lorsque la situation de conduite est constatée et qu'un glissement de traction se présente sur les deux roues, à abaisser la pression de frein sur la roue motrice située sur le côté à faible coefficient de frottement.

2. Procédé suivant la revendication 1, **caractérisé en ce que**, pour la constatation, les opérations suivantes sont exécutées :
déterminer quel côté du véhicule est le côté à coefficient de frottement élevé et quel est le côté à faible coefficient de frottement,
contrôler si le glissement de la roue motrice située du côté à coefficient de frottement élevé se trouve supérieur à une première valeur de seuil,
contrôler si le glissement de la roue motrice située sur le côté à faible coefficient de frottement se trouve supérieur à une deuxième valeur de seuil,
contrôler si l'accélération de glissement et/ou l'accélération de roue sur la roue motrice située sur le côté à coefficient de frottement élevé se trouvent supérieures à une valeur de seuil positive et si l'accélération de glissement et/ou l'accélération de roue sur la roue motrice située sur le côté à faible coefficient de frottement sont inférieures à une valeur de seuil négative, et
contrôler les pressions de frein sur les deux roues et/ou comparer les pressions de frein l'une à l'autre.

3. Procédé suivant la revendication 2, **caractérisé en ce que**, lors de la détermination du côté à coefficient de frottement élevé et du côté à faible coefficient de frottement, les glissements ou vitesses des roues motrices sont comparés, le côté sur lequel le plus grand glissement est présent étant déterminé comme étant le côté à faible coefficient de frottement.

4. Procédé suivant la revendication 2 ou 3, **caractérisé en ce que** la première valeur de seuil est fixée à une valeur plus faible qu'une valeur de seuil pour laquelle intervient une régulation de glissement de traction roue par roue.

5. Procédé suivant l'une des revendications 2 à 4, **caractérisé en ce que**, lors du contrôle des pressions de frein, la pression de frein sur le côté à faible coefficient de frottement est contrôlée sur le fait de savoir si elle est supérieure à une troisième valeur de seuil, et la pression de frein sur le côté à coefficient de frottement élevé sur le fait de savoir si elle est inférieure à une quatrième valeur de seuil.

6. Procédé suivant l'une des revendications 2 à 5, **caractérisé en ce que**, lors de la comparaison des pressions de frein, celles-ci sont contrôlées sur le fait de savoir si la pression de frein sur le côté à coefficient de frottement élevé est inférieure d'au moins une valeur déterminée à la pression de frein sur le côté à faible coefficient de frottement.

7. Procédé suivant l'une des revendications 2 à 6, **caractérisé en ce que**, comme valeurs de glissement de roue, on fait appel à des valeurs filtrées.

8. Procédé suivant l'une des revendications précédentes, **caractérisé en ce que** l'abaissement de pression de frein a lieu proportionnellement à un gradient pouvant être déterminé.

9. Procédé suivant la revendication 8, **caractérisé en ce que** le gradient est déterminé proportionnellement au glissement et/ou à l'accélération de glissement de la roue située sur le côté à coefficient de frottement élevé et/ou de la roue située sur le côté à faible coefficient de frottement.

10. Procédé suivant l'une des revendications précédentes, **caractérisé en ce qu'**il est mis en oeuvre en complément à un procédé de régulation de glissement de traction, s'exerçant roue par roue, lors duquel, roue par roue, le glissement de traction est comparé à un seuil dépendant éventuellement de la vitesse de véhicule et est modifié par abaissement de couple moteur et/ou accroissement de pression de frein roue par roue.

11. Dispositif de régulation du glissement de traction d'un véhicule sur une voie de roulement à coefficients de frottement différents d'un côté à l'autre, notamment pour la mise en oeuvre du procédé suivant l'une des revendications 1 à 10, **caractérisé par**
un dispositif de constatation (22) servant à constater une situation de conduite sur une voie de roulement à coefficients de frottement différents d'un côté à l'autre, et une commande de frein (24) qui, lorsque la situation de conduite est constatée et qu'un glissement de traction se présente sur les deux roues, abaisse la pression de frein sur la roue motrice située sur le côté à faible coefficient de frottement.

12. Dispositif suivant la revendication 11, **caractérisé en ce que** le dispositif de constatation (22) comprend :
un dispositif de détermination (30) servant à déterminer quel côté du véhicule est le côté à coefficient de frottement élevé et lequel est le côté à faible coefficient de frottement, et
un dispositif de contrôle (32) servant à contrôler si le glissement de la roue motrice située sur le côté à coefficient de frottement élevé est supérieur à une première valeur de seuil, si le glissement de la roue motrice située sur le côté à faible coefficient de frottement est supérieur à une deuxième valeur de seuil, si l'accélération de glissement et/ou l'accélération de roue sur la roue motrice située sur le côté à coefficient de frottement élevé est supérieure à une valeur de seuil positive et si l'accélération de glissement et/ou l'accélération de roue sur la roue motrice située sur le côté à faible coefficient de frottement est inférieure à une valeur de seuil négative, et servant à contrôler les pressions de frein sur les deux roues et/ou comparer les pressions de frein l'une à l'autre.

13. Dispositif suivant la revendication 12, **caractérisé en ce que** le dispositif de détermination (30) comprend un dispositif de comparaison (33) servant à comparer les glissements ou les vitesses des roues motrices, le côté sur lequel le plus grand glissement ou la plus grande vitesse est présent étant déterminé comme étant le côté à faible coefficient de frottement.

14. Dispositif suivant la revendication 12 ou 13, **caractérisé en ce que** la première valeur de seuil est fixée à une valeur plus faible qu'une valeur de seuil pour laquelle intervient une régulation de glissement de traction roue par roue.

15. Dispositif suivant l'une des revendications 12 à 14, **caractérisé en ce que** le dispositif de contrôle (32) contrôle la pression de frein sur le côté à faible coefficient de frottement sur le fait de savoir si elle est supérieure à une troisième valeur de seuil, et la pression de frein sur le côté à coefficient de frottement élevé sur le fait de savoir si elle est inférieure à une quatrième valeur de seuil.

16. Dispositif suivant l'une des revendications 12 à 15, **caractérisé en ce que**, lors de la comparaison des pressions de frein, celles-ci sont contrôlées sur le fait de savoir si la pression de frein sur le côté à coefficient de frottement élevé est inférieure au moins d'une valeur déterminée à la pression de frein sur le côté à faible coefficient de frottement.

17. Dispositif suivant l'une des revendications 12 à 16, **caractérisé en ce que**, comme valeurs de glissement de roue, on fait appel à des valeurs filtrées.

18. Dispositif suivant l'une des revendications 11 à 17, **caractérisé en ce que** la commande de frein (24) comprend un dispositif de fixation préalable (40, 41) servant à préfixer un gradient de consigne pour l'abaissement de pression de frein.

19. Dispositif suivant la revendication 18, **caractérisé en ce que** le dispositif de fixation préalable (40, 41) détermine le gradient proportionnellement au glissement et/ou à l'accélération de glissement de la route située sur le côté à coefficient de frottement élevé et/ou de la roue située sur le côté à faible coefficient de frottement.

20. Dispositif suivant l'une des revendications 11 à 19, **caractérisé en ce qu'**il est prévu en complément à un dispositif de régulation de glissement de traction, s'exerçant roue par roue, dans lequel, roue par roue, le glissement de traction est comparé à un seuil dépendant éventuellement de la vitesse de véhicule et est modifié par abaissement de couple moteur et/ou accroissement de pression de frein roue par roue.
